# EUROPEAN PATENT SPECIFICATION

(11) **EP 3 970 474 B1**
(45) Date of publication and mention of the grant of the patent: **15.05.2024**
(21) Application number: 21191140.9
(22) Date of filing: 12.08.2021
(51) Int. Cl.: A01F 15/08, G01F 1/76, G01F 1/05, G01S 13/931, G01S 17/88, G01S 13/88, G01F 1/704, G01F 1/66, A01B 69/04

(54) **AUTOMATED TRACTOR SPEED ADJUSTMENT FOR AVOIDANCE OF PLUGGING A BALER**
AUTOMATISCHE TRAKTORGESCHWINDIGKEITSREGELUNG ZUR VERMEIDUNG DER VERSTOPFUNG EINER BALLENPRESSE
RÉGLAGE AUTOMATIQUE DE LA VITESSE DE TRACTEUR POUR ÉVITER L'OBTURATION DE LA PRESSE À BALLES

(30) Priority: 27.08.2020 US 202063071108 P
(43) Date of publication of application: 23.03.2022
(60) Divisional application: 23152282.2
(73) Proprietor: AGCO Corporation, Duluth, GA 30096 (US)
(72) Inventor: GOOD, Grant Lewis, Hesston, 67062-0969 (US); KENDRICK, Patrick, Hesston, 67060-0969 (US); BUSENITZ, Brian, Hesston, 67062-0969 (US); HAMILTON, Kevin J, Hesston, 67062-0969 (US)
(74) Representative: AGCO Intellectual Property Department

(56) References cited:
- WO-A1-2018/206677
- US-A1- 2001 042 362
- US-A1- 2015 379 785
- US-B2- 9 357 709

## Description

### FIELD OF THE INVENTION

Embodiments of the current invention relate to systems and methods for adjusting a speed of a tractor pulling a baler to avoid baler plugging.

### BACKGROUND

Balers, or hay balers, are machines that gather and compress a cut fodder crop, such as hay, cotton, flax straw, salt marsh hay, or silage, into a compact and manageable bale. After the fodder crop is cut, and before it is baled, it is usually left on the ground in a field in a plurality of elongated, relatively narrow windrows. Balers typically include a pickup located at their front end which has rotors and tines or other components to gather up the crop and feed it to a compressor which compresses the cut crop before tying it and ejecting it. Given the conditions of the crop and the throughput of the pickup, there is a maximum speed at which the baler can travel before the amount of the crop coming into the pickup exceeds its capacity and either the baler starts pushing the crop, instead of baling it, or the baler becomes plugged downstream from the pickup.

Typically, the baler is pulled by a tractor which is driven by an operator. Adjusting the speed of the baler to avoid overloading the baler is a manual process performed by the tractor operator looking over his shoulder at the pickup of the baler. If the operator notices an increasing load in the pickup, he may slow down, and if he notices a decreasing load in the pickup, he may speed up. If the operator becomes distracted and does not slow down when the load in the pickup increases, the baler will become plugged or the crop will be pushed by the baler.

US2001/042362 (New Holland) discusses a method of advancing a tractor square baler combination in which a processor assesses the flow rate of crop through the baler and varies the speed of the tractor to maximise the flow rate of crop material through the baler. The flow rate of the crop through the baler is determined in a number of ways: detecting one or more of the torque in a baler packer driveshaft; the torque in the tractor Power Take Off (PTO) shaft; the force exerted by one or more of the baler packer fork conrods; and the position of a sensor door. Where the baler is of the type that includes a rotary feeder assembly, the rotary feeder driveshaft torque is used to provide an indication of the loading deriving from the packing/feeding operation. Each of these variables has been found to correlate with the flow rate of crop through the pre-compression chamber.

### SUMMARY OF THE INVENTION

Embodiments of the current invention solve the above-mentioned problems and provide a distinct advance in the art of balers. Specifically, embodiments of the present invention may provide systems and methods for adjusting a tractor speed based on a performance of a pickup of a baler to avoid baler plugging.

An embodiment of the system broadly comprises a flow rate sensor, a processing element, and a tractor speed controller. The flow rate sensor is configured to monitor a feed point of the pickup, sense a flow rate of a crop into the pickup, and output a flow rate signal with a level and/or data value that varies according to the flow rate of the crop into the pickup. The processing element is configured or programmed to receive the flow rate signal, receive a speed signal and/or data regarding a speed of a tractor pulling the baler, compare the flow rate from the flow rate signal with the speed from the speed signal and/or data to generate a comparison result, and output an electronic speed signal with a level and/or data value that varies according to the comparison result. The tractor speed controller is configured to receive the speed signal and adjust a speed of the tractor according to the level and/or data value of the speed signal.

An embodiment of the method broadly comprises monitoring the pickup and determining a flow rate of a crop into the pickup; receiving a signal and/or data regarding a speed of a tractor pulling the baler; comparing the flow rate from the flow rate signal with the speed from the speed signal and/or data to generate a comparison result; and adjusting the speed of the tractor according to the comparison result.

This summary is provided to introduce a selection of concepts in a simplified form that are further described below in the detailed description. This summary is not intended to identify key features or essential features of the claimed subject matter, nor is it intended to be used to limit the scope of the claimed subject matter. Other aspects and advantages of the current invention will be apparent from the following detailed description of the embodiments and the accompanying drawing figures.

### BRIEF DESCRIPTION OF THE DRAWING FIGURES

Embodiments of the current invention are described in detail below with reference to the attached drawing figures, wherein:
Fig. 1 is an overhead environmental view of a field including a plurality of windrows where a tractor is pulling a baler including a system, constructed in accordance with various embodiments of the current invention, for adjusting a tractor speed based on a performance of a pickup of the baler and to avoid a plugging event in the baler;
Fig. 2 is a side view of the tractor and the baler;
Fig. 3 is a schematic block diagram of various electronic components of the system;
Fig. 4 is a listing of at least a portion of the steps of a method for adjusting a tractor speed based on a performance of the pickup; and
Fig. 5 is a listing of at least a portion of the steps of a method for adjusting a tractor speed to avoid a plugging event in the baler.

The drawing figures do not limit the current invention to the specific embodiments disclosed and described herein. The drawings are not necessarily to scale, emphasis instead being placed upon clearly illustrating the principles of the invention.

### DETAILED DESCRIPTION OF THE EMBODIMENTS

The following detailed description of the technology references the accompanying drawings that illustrate specific embodiments in which the technology can be practiced. The embodiments are intended to describe aspects of the technology in sufficient detail to enable those skilled in the art to practice the technology. Other embodiments can be utilized and changes can be made without departing from the scope of the appended claims. The following detailed description is, therefore, not to be taken in a limiting sense. The scope of the current invention is defined only by the appended claims.

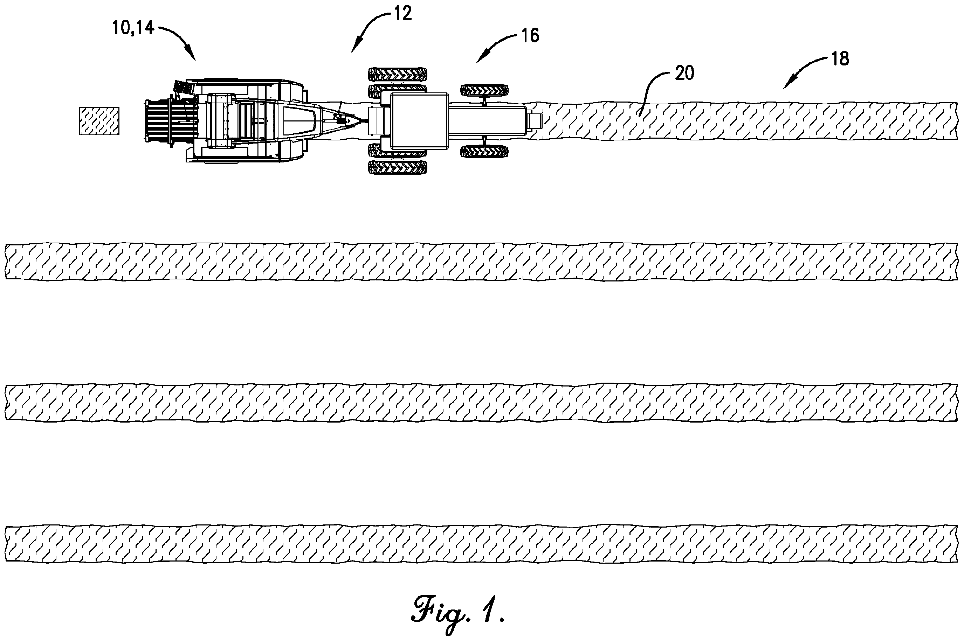

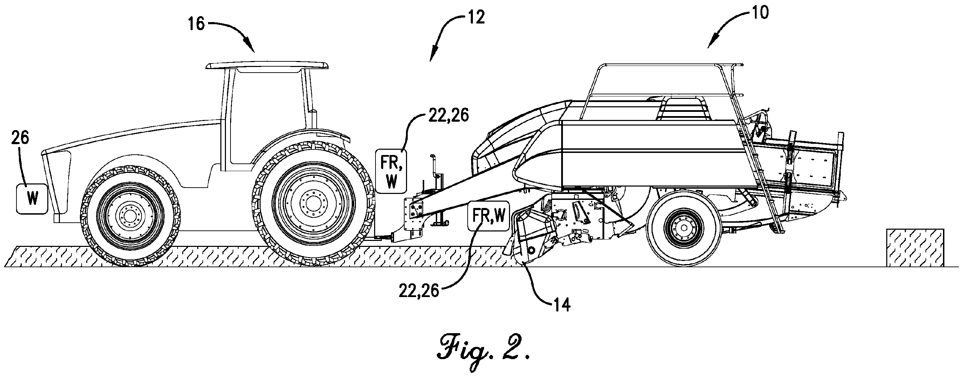

A baler 10 including a system 12, constructed in accordance with various embodiments of the current invention, for adjusting a tractor speed based on a performance of a pickup 14 of the baler 10 and to avoid a plugging event in the baler 10 is shown in Figs. 1 and 2. The baler 10 is pulled by a tractor 16, driven by an operator, over a windrow 18 of a cut crop 20 while the baler 10 performs the process of baling the cut crop 20, i.e., collecting, compressing, and tying it. The cut crop 20 may include hay, cotton, flax straw, salt marsh hay, or silage.

The baler 10 may be a "round" baler, which produces cylindrically shaped bales, or a large or small "square" baler, which produces rectangular bales such as the ones shown in Fig. 2. The pickup 14 of the baler 10 may include a plurality of outward-extending tines attached to a rotating cylinder. The tines receive, contact, and grab the cut crop 20 from the windrow 18. The gathered crop 20 is then fed, or passed, from the pickup 14 to other components of the baler 10 which compress and tie the crop 20 into a bale.

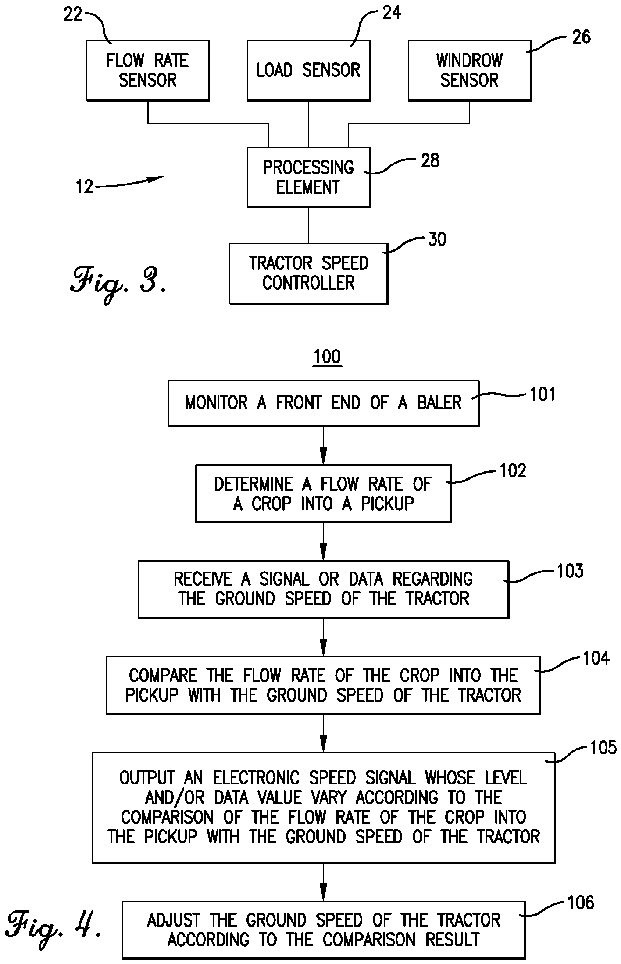

The system 12, as shown in Fig. 3, broadly comprises a flow rate sensor 22, a load sensor 24, a windrow sensor 26, a processing element 28, and a tractor speed controller 30. The flow rate sensor 22 generally monitors a front end of the baler 10, that is, the feed point of the pickup 14, and determines or senses a flow rate, or feed rate, of the crop 20 into the pickup 14. The flow rate sensor 22 may include radio frequency transceivers such as radar transceivers, laser light transceivers such as lidar transceivers, video imaging or photograph imaging cameras, or contact devices, such as wheels or rotors that engage the crop 20, which can determine the flow rate of the crop 20 into the pickup 14. The flow rate sensor 22 (indicated as a plurality of boxes with an "FR" in Fig. 2) may be positioned in at least one of the following locations: on the rear of the tractor 16 or on the front of the baler 10 such that the flow rate sensor 22 has an unobstructed view of the front of the baler 10. The flow rate sensor 22 outputs an electronic flow rate signal and/or data that includes a level and/or value that varies according to, is proportional to, or positively correlates to, the flow rate of the crop 20 into the pickup 14. For example, the flow rate signal may have a greater level and/or value when the flow rate has a greater value. The flow rate signal may have a smaller level and/or value when the flow rate has a smaller value. In some embodiments, the flow rate signal may represent the flow rate of the crop 20 into the pickup 14 as a speed, such as feet per second or meters per second. In other embodiments, the flow rate signal may represent the flow rate of the crop 20 into the pickup 14 as a volume rate, such as gallons per second or liters per second.

The load sensor 24 generally senses or detects a load on the pickup 14 during operation and may include transducers or other devices to sense or detect electric voltage, electric current, fluid pressure, air pressure, or the like. An exemplary load sensor 24 includes a fluid pressure sensor to sense or detect hydraulic fluid pressure of the hydraulic fluid used in the pickup 14. A value of the hydraulic fluid pressure generally corresponds, or positively correlates, to a level of the load on the pickup 14. That is, a high value of the hydraulic fluid pressure corresponds to a large load on the pickup 14. And, a low value of the hydraulic fluid pressure corresponds to a small load on the pickup 14. The load sensor 24 outputs an electronic load signal and/or data that includes a level and/or value that varies according to, is proportional to, or positively correlates to, the load on the pickup 14.

The windrow sensor 26 generally monitors a ground area in front of the baler 10 and determines or senses a cross-sectional area of the windrow 18. Typically, the windrow sensor 26 determines the cross-sectional area of the windrow 18 widthwise, or looking axially along the windrow 18, as opposed to lengthwise, or looking transverse at the windrow 18. The windrow sensor 26 may include radio frequency transceivers such as radar transceivers, laser light transceivers such as lidar transceivers, video imaging or photograph imaging cameras, or other non-contact devices, such as ultrasonic devices, that can determine the cross-sectional area of the windrow 18. The windrow sensor 26 (indicated as a plurality of boxes with a "W" in Fig. 2) may be positioned in at least one of the following locations: on the front of the tractor 16, on the rear of the tractor 16, or on the front of the baler 10 such that the windrow sensor 26 has an unobstructed view of the ground in front of the baler 10. The windrow sensor 26 may further include signal or data processing components that process the radar, lidar, video, or photographic data and determine the cross-sectional area of the windrow 18. The windrow sensor 26 outputs an electronic windrow signal and/or data that includes a level and/or value that varies according to, is proportional to, or positively correlates to, the cross-sectional area of the windrow 18. For example, the windrow signal may have a greater value when the cross-sectional area of the windrow 18 has a greater value. The windrow signal may have a smaller value when the cross-sectional area of the windrow 18 has a smaller value. Alternatively, the windrow sensor 26 may output the windrow sensor signal and/or data that varies according to the ground area in front of the baler 10 and includes a radar, lidar, video, or photographic representation of the ground in front of the baler 10 without processing to determine the cross-sectional area of the windrow 18.

The processing element 28 may comprise one or more processors. The processing element 28 may include electronic hardware components such as microprocessors (single-core or multi-core), microcontrollers, digital signal processors (DSPs), field-programmable gate arrays (FPGAs), analog and/or digital application-specific integrated circuits (ASICs), or the like, or combinations thereof. The processing element 28 may generally execute, process, or run instructions, code, code segments, code statements, software, firmware, programs, applications, apps, processes, services, daemons, or the like. The processing element 28 may also include hardware components such as registers, finite-state machines, sequential and combinational logic, configurable logic blocks, and other electronic circuits that can perform the functions necessary for the operation of the current invention. In certain embodiments, the processing element 28 may include multiple computational components and functional blocks that are packaged separately but function as a single unit. The processing element 28 may be in electronic communication with the other electronic components through serial or parallel links that include universal busses, address busses, data busses, control lines, and the like.

The processing element 28 may further comprise or be in electronic communication with a memory element. The memory element may be embodied by devices or components that store data in general, and digital or binary data in particular, and may include exemplary electronic hardware data storage devices or components such as read-only memory (ROM), programmable ROM, erasable programmable ROM, random-access memory (RAM) such as static RAM (SRAM) or dynamic RAM (DRAM), cache memory, hard disks, floppy disks, optical disks, flash memory, thumb drives, universal serial bus (USB) drives, or the like, or combinations thereof. In some embodiments, the memory element may be embedded in, or packaged in the same package as, the processing element 28. The memory element may include, or may constitute, a non-transitory "computer-readable medium". The memory element may store the instructions, code, code statements, code segments, software, firmware, programs, applications, apps, services, daemons, or the like that are executed by the processing element 28. The memory element may also store data that is received by the processing element 28 or the device in which the processing element 28 is implemented. The processing element 28 may further store data or intermediate results generated during processing, calculations, and/or computations as well as data or final results after processing, calculations, and/or computations. In addition, the memory element may store settings, data, documents, sound files, photographs, movies, images, databases, and the like.

The processing element 28 may be operable, configured, or programmed to perform the following functions by utilizing hardware, software, firmware, or combinations thereof. The processing element 28 receives the flow rate signal from the flow rate sensor 22. The processing element 28 may also receive a speed signal and/or data regarding the speed, or ground speed, of the tractor 16 and/or baler 10. The speed signal and/or data may be received from the tractor 16 or speed sensors positioned on the baler 10. The processing element 28 compares the flow rate of the crop 20 into the pickup 14 with the speed of the baler 10 by comparing the flow rate signal with the speed signal and/or data, which generates a comparison result. (This assumes that the flow rate of the crop 20 into the pickup 14 from the flow rate signal is expressed as a speed, such feet per second or meters per second. If the flow rate of the crop 20 into the pickup 14 is expressed in other units or terms, then the flow rate is converted to a speed.) The processing element 28 outputs an electronic speed signal that is received by the tractor speed controller 30. The level and/or data value of the speed signal determines the speed of the tractor 16, and hence the baler 10. The processing element 28 adjusts the level and/or data value of the speed signal according to, or based on, the comparison result, i.e., the comparison of the flow rate of the crop 20 into the pickup 14 with the speed of the baler 10. For example, if the flow rate is greater than the speed, then the processing element 28 adjusts the level and/or data value of the speed signal to increase the speed of the tractor 16. If the flow rate is less than the speed, then the processing element 28 adjusts the level and/or data value of the speed signal to decrease the speed of the tractor 16. If the flow rate is approximately equal to the speed, then the processing element 28 maintains the current level and/or data value of the speed signal. With the speed of the tractor 16 and the baler 10 set properly, the baler 10 can go slow enough to avoid overloading the pickup 14 while at the same time going fast enough to provide optimum performance.

The processing element 28 receives the load signal from the load sensor 24, and the windrow signal from the windrow sensor 26. In addition, the processing element 28 has knowledge of, or receives a crop moisture signal and/or data regarding, a moisture level of the crop 20. For example, the tractor operator may enter information about the moisture level of the crop 20 into a user interface electronically coupled to the processing element 28. Or, the processing element 28 may receive a crop moisture signal and/or data about the moisture level of the crop 20 from one or more moisture/humidity sensors positioned on the baler 10 or the tractor 16. The processing element 28 outputs the speed signal and adjusts its level and/or data value according to, or based on, the load of the pickup 14, the cross-sectional area of the crop 20, and the moisture level of the crop 20. In some embodiments, the processing element 28 may set the level and/or data value of the speed signal through the use of a dynamic lookup table that may be stored in the memory element associated with the processing element 28. For example, the lookup table may include a plurality of columns, one column to hold values for each of the measured or known quantities including the load of the pickup 14, the cross-sectional area of the crop 20, and the moisture level of the crop 20. The table may also include a column for the level and/or data value of the speed signal. The lookup table would include a plurality of rows, each row including a different combination of values for the load of the pickup 14, the cross-sectional area of the crop 20, and the moisture level of the crop 20. Each row would also include the appropriate level and/or data value of the speed signal for the given combination of the load of the pickup 14, the cross-sectional area of the crop 20, and the moisture level of the crop 20. Thus, to set the level and/or data value of the speed signal, the processing element 28 would retrieve the level and/or data value of the speed signal stored in the lookup table in the row pointed to by the combination of the current values for the load of the pickup 14, the cross-sectional area of the crop 20, and the moisture level of the crop 20.

In other embodiments, the processing element 28 may apply an algorithm, including a sequence of steps, in order to set the level and/or data value of the speed signal given the values for the load of the pickup 14, the cross-sectional area of the crop 20, and the moisture level of the crop 20.

In still other embodiments, the processing element 28 may determine the level and/or data value of the speed signal through the use of an equation that describes the relationship between the speed of the baler 10 and the load of the pickup 14, the cross-sectional area of the crop 20, and the moisture level of the crop 20. The equation may have a form such as: SPEED = f(LOAD, CSA, MOISTURE), wherein LOAD is the load of the pickup 14, CSA is the cross-sectional area of the crop 20, and MOISTURE is the moisture level of the crop 20. The specific expression for each variable in the equation may be predetermined empirically or using other techniques. Thus, to set the level and/or data value of the speed signal, the processing element 28 would simply plug the current values for the load of the pickup 14, the cross-sectional area of the crop 20, and the moisture level of the crop 20 into the equation.

In general, an increase in the cross-sectional area of the crop 20 will lead to an increase in the load on the pickup 14. Thus, the level and/or data value of the speed signal, and in turn the speed of the tractor 16, may be decreased to prevent the load on the pickup 14 exceeding a certain value. In addition, a decrease in the cross-sectional area of the crop 20 will lead to a decrease in the load on the pickup 14. Thus, the level and/or data value of the speed signal, and in turn the speed of the tractor 16, may be increased to maintain the load on the pickup 14 in a certain optimal range. Furthermore, an increase in the moisture level of the crop 20 may increase the load on the pickup 14, while a decrease in the moisture level of the crop 20 may decrease the load on the pickup 14. Accordingly, the level and/or data value of the speed signal may be decreased in response to an increase in the moisture level and may be increased in response to an decrease in the moisture level. With the speed of the tractor 16 and the baler 10 set properly, the baler 10 can go slow enough to avoid a plugging event while at the same time going fast enough to provide optimum performance.

The tractor speed controller 30 generally controls the speed of the tractor 16 and, in turn, the baler 10. The tractor speed controller 30 may include microprocessors, microcontrollers, FPGAs, or the like, or combinations thereof. The tractor speed controller 30 receives the speed signal from the processing element 28 through a controller area network (CAN) bus, an ISOBUS, or other communication standard architectures. The tractor speed controller 30 may output one or more electronic signals that are received by mechanical systems or mechanical control systems which provide propulsion or drive for the tractor 16. The electronic signals output by the tractor speed controller 30 set the speed of the tractor 16 to vary according to, or based on, the level and/or data value of the speed signal. In some embodiments, the speed of the tractor 16 varies according to the comparison result from comparing the flow rate of the crop 20 into the pickup 14 with the speed of the tractor 16. In other embodiments, the speed of the tractor 16 varies according to the load of the pickup 14, the cross-sectional area of the crop 20, and the moisture level of the crop 20.

Fig. 4 depicts a listing of at least a portion of the steps of an exemplary method 100 for adjusting a tractor speed based on a performance of the pickup 14 of the baler 10. The steps may be performed in the order shown in Fig. 4, or they may be performed in a different order. Furthermore, some steps may be performed concurrently as opposed to sequentially. In addition, some steps may be optional or may not be performed.

Referring to step 101, a front end of the baler 10 is monitored. The flow rate sensor 22 generally monitors a front end of the baler 10 and determines or senses a flow rate, or feed rate, of the crop 20 into the pickup 14. The flow rate sensor 22 may include radio frequency transceivers such as radar transceivers, laser light transceivers such as lidar transceivers, video imaging or photograph imaging cameras, or contact devices, such as wheels or rotors that engage the crop 20.

Referring to step 102, a flow rate of a crop 20 into the pickup 14 is determined or sensed. The flow rate is determined by the flow rate sensor 22, which outputs an electronic flow rate signal and/or data that includes a level and/or value that varies according to, is proportional to, or positively correlates to, the flow rate of the crop 20 into the pickup 14. For example, the flow rate signal may have a greater level and/or value when the flow rate has a greater value. The flow rate signal may have a smaller level and/or value when the flow rate has a smaller value. In some embodiments, the flow rate signal may represent the flow rate of the crop 20 into the pickup 14 as a speed, such as feet per second or meters per second.

Referring to step 103, a signal and/or data regarding the speed, or ground speed, of the tractor 16 and/or baler 10 is received. The speed signal and/or data may be received from the tractor 16 or speed sensors positioned on the baler 10.

Referring to step 104, the flow rate of the crop 20 into the pickup 14 is compared with the speed of the tractor 16 and/or baler 10. The processing element 28 receives both the flow rate signal (including flow rate data of the crop 20) and the speed signal and/or data, which generates a comparison result. (This assumes that the flow rate of the crop 20 into the pickup 14 is expressed as a speed, such feet per second or meters per second. If the flow rate of the crop 20 into the pickup 14 is expressed in other units or terms, then the flow rate is converted to a speed.)

Referring to step 105, an electronic speed signal is output whose level and/or data value varies according to the comparison result, i.e., the comparison of the flow rate of the crop 20 into the pickup 14 with the speed of the tractor 16 and/or the baler 10. The speed signal is output by the processing element 28. If the flow rate is greater than the speed, then the processing element 28 adjusts the level and/or data value of the speed signal to increase the speed of the tractor 16. If the flow rate is less than the speed, then the processing element 28 adjusts the level and/or data value of the speed signal to decrease the speed of the tractor 16. If the flow rate is approximately equal to the speed, then the processing element 28 maintains the current level and/or data value of the speed signal.

Referring to step 106, the speed of the tractor 16 is adjusted according to the comparison result. The tractor speed controller 30 generally controls the speed of the tractor 16 and, in turn, the baler 10. The tractor speed controller 30 may include microprocessors, microcontrollers, FPGAs, or the like, or combinations thereof. The speed signal is received by the tractor speed controller 30 which outputs one or more electronic signals that are received by mechanical systems or mechanical control systems which provide propulsion or drive for the tractor 16. The electronic signals output by the tractor speed controller 30 set the speed of the tractor 16 to vary according to, or based on, the level and/or data value of the speed signal. Thus, the speed of the tractor 16 is increased if the flow rate of the crop 20 into the pickup 14 is greater than the speed of the tractor 16. The speed of the tractor 16 is decreased if the flow rate of the crop 20 into the pickup 14 is less than the speed of the tractor 16. The speed of the tractor 16 is maintained if the flow rate of the crop 20 into the pickup 14 is approximately equal to the speed of the tractor 16. With the speed of the tractor 16 and the baler 10 set properly, the baler 10 can go slow enough to avoid overloading the pickup 14 while at the same time going fast enough to provide optimum performance.

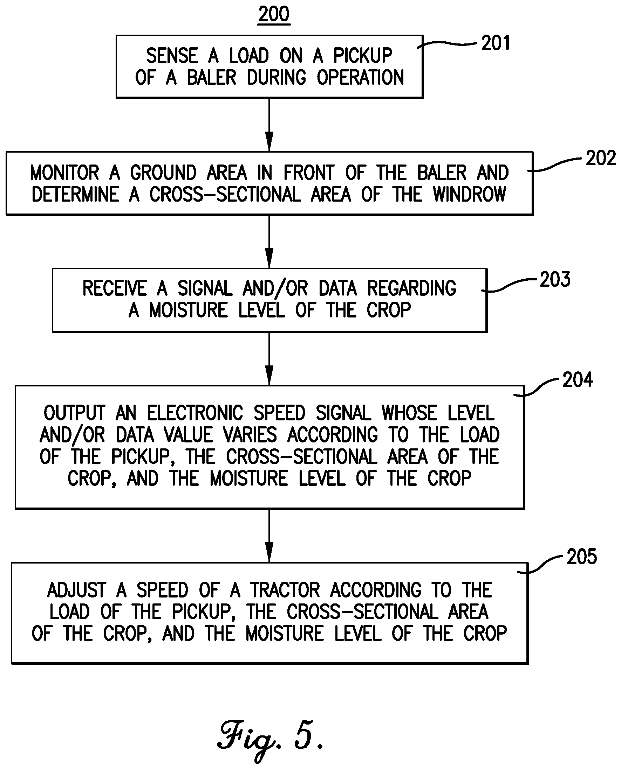

Fig. 5 depicts a listing of at least a portion of the steps of an exemplary method 200 for adjusting a tractor speed to avoid a plugging event in the baler 10. The steps may be performed in the order shown in Fig. 5, or they may be performed in a different order. Furthermore, some steps may be performed concurrently as opposed to sequentially. In addition, some steps may be optional or may not be performed.

Referring to step 201, a load on the pickup 14 is sensed during operation. The load sensor 24 generally senses or detects a load on the pickup 14 during operation and may include transducers or other devices to sense or detect electric voltage, electric current, fluid pressure, air pressure, or the like. An exemplary load sensor 24 includes a fluid pressure sensor to sense or detect hydraulic fluid pressure of the hydraulic fluid used in the pickup 14. A value of the hydraulic fluid pressure generally corresponds, or positively correlates, to a level of the load on the pickup 14. That is, a high value of the hydraulic fluid pressure corresponds to a large load on the pickup 14. And, a low value of the hydraulic fluid pressure corresponds to a small load on the pickup 14. The load sensor 24 outputs an electronic load signal and/or data that includes a level and/or value that varies according to, is proportional to, or positively correlates to, the load on the pickup 14.

Referring to step 202, a ground area in front of the baler 10 is monitored and a cross-sectional area of the windrow 18 is determined. The windrow sensor 26 generally monitors a ground area in front of the baler 10 and determines or senses a cross-sectional area of the windrow 18. Typically, the windrow sensor 26 determines the cross-sectional area of the windrow 18 widthwise, or looking axially along the windrow 18, as opposed to lengthwise, or looking transverse at the windrow 18. The windrow sensor 26 may include radio frequency transceivers such as radar transceivers, laser light transceivers such as lidar transceivers, video imaging or photograph imaging cameras, or other non-contact devices, such as ultrasonic devices, that can determine the cross-sectional area of the windrow 18. The windrow sensor 26 (indicated as a plurality of boxes with an "W" in Fig. 2) may be positioned in at least one of the following locations: on the front of the tractor 16, on the rear of the tractor 16, or on the front of the baler 10 such that the windrow sensor 26 has an unobstructed view of the ground in front of the baler 10. The windrow sensor 26 may further include signal or data processing components that process the radar, lidar, video, or photographic data and determine the cross-sectional area of the windrow 18. The windrow sensor 26 outputs an electronic windrow signal and/or data that includes a level and/or value that varies according to, is proportional to, or positively correlates to, the cross-sectional area of the windrow 18. For example, the windrow signal may have a greater value when the cross-sectional area of the windrow 18 has a greater value. The windrow signal may have a smaller value when the cross-sectional area of the windrow 18 has a smaller value.

Referring to step 203, a signal and/or data is received regarding a moisture level of the crop 20. The tractor operator may enter information about the moisture level of the crop 20 into a user interface electronically coupled to the processing element 28. Or, the processing element 28 may receive a signal and/or data about the moisture level of the crop 20 from one or more moisture/humidity sensors positioned on the baler 10 or the tractor 16.

Referring to step 204, a speed signal is output whose level and/or data value varies according to the load of the pickup 14, the cross-sectional area of the crop 20, and the moisture level of the crop 20. The processing element 28 receives the load signal, the windrow signal, and the signal and/or data about the moisture level of the crop 20 and outputs the speed signal. In some embodiments, the processing element 28 may set the level and/or data value of the speed signal through the use of a dynamic lookup table that may be stored in the memory element associated with the processing element 28. For example, the lookup table may include a plurality of columns, one column to hold values for each of the measured or known quantities including the load of the pickup 14, the cross-sectional area of the crop 20, and the moisture level of the crop 20. The table may also include a column for the level and/or data value of the speed signal. The lookup table would include a plurality of rows, each row including a different combination of values for the load of the pickup 14, the cross-sectional area of the crop 20, and the moisture level of the crop 20. Each row would also include the appropriate level and/or data value of the speed signal for the given combination of the load of the pickup 14, the cross-sectional area of the crop 20, and the moisture level of the crop 20. Thus, to set the level and/or data value of the speed signal, the processing element 28 would retrieve the level and/or data value of the speed signal stored in the lookup table in the row pointed to by the combination of the current values for the load of the pickup 14, the cross-sectional area of the crop 20, and the moisture level of the crop 20.

In other embodiments, the processing element 28 may apply an algorithm, including a sequence of steps, in order to set the level and/or data value of the speed signal given the values for the load of the pickup 14, the cross-sectional area of the crop 20, and the moisture level of the crop 20.

In still other embodiments, the processing element 28 may determine the level and/or data value of the speed signal through the use of an equation that describes the relationship between the speed of the baler 10 and the load of the pickup 14, the cross-sectional area of the crop 20, and the moisture level of the crop 20. The equation may have a form such as: SPEED = f(LOAD, CSA, MOISTURE), wherein LOAD is the load of the pickup 14, CSA is the cross-sectional area of the crop 20, and MOISTURE is the moisture level of the crop 20. The specific expression for each variable in the equation may be predetermined empirically or using other techniques. Thus, to set the level and/or data value of the speed signal, the processing element 28 would simply plug the current values for the load of the pickup 14, the cross-sectional area of the crop 20, and the moisture level of the crop 20 into the equation.

Referring to step 205, a speed of the tractor 16 is adjusted according to the load of the pickup 14, the cross-sectional area of the crop 20, and the moisture level of the crop 20. The tractor speed controller 30 generally controls the speed of the tractor 16 and, in turn, the baler 10. The tractor speed controller 30 may include microprocessors, microcontrollers, FPGAs, or the like, or combinations thereof. The tractor speed controller 30 receives the speed signal from the processing element 28. Given that the level and/or data value of the speed signal is adjusted according to the load of the pickup 14, the cross-sectional area of the crop 20, and the moisture level of the crop 20, so too is the speed of the tractor 16.

In general, an increase in the cross-sectional area of the crop 20 will lead to an increase in the load on the pickup 14. Thus, the speed of the tractor 16 may be decreased to prevent the load on the pickup 14 exceeding a certain value. In addition, a decrease in the cross-sectional area of the crop 20 will lead to a decrease in the load on the pickup 14. Thus, the speed of the tractor 16 may be increased to maintain the load on the pickup 14 in a certain optimal range. Furthermore, an increase in the moisture level of the crop 20 may increase the load on the pickup 14, while a decrease in the moisture level of the crop 20 may decrease the load on the pickup 14. Accordingly, the speed of the tractor 16 may be decreased in response to an increase in the moisture level and may be increased in response to an decrease in the moisture level. With the speed of the tractor 16 and the baler 10 set properly, the baler 10 can go slow enough to avoid a plugging event while at the same time going fast enough to provide optimum performance.

### ADDITIONAL CONSIDERATIONS

Throughout this specification, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the current invention can include a variety of combinations and/or integrations of the embodiments described herein.

Although the present application sets forth a detailed description of numerous different embodiments, it should be understood that the legal scope of the description is defined by the words of the claims set forth at the end of this patent and equivalents. The detailed description is to be construed as exemplary only and does not describe every possible embodiment since describing every possible embodiment would be impractical. Numerous alternative embodiments may be implemented, using either current technology or technology developed after the filing date of this patent, which would still fall within the scope of the claims.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components.

Certain embodiments are described herein as including logic or a number of routines, subroutines, applications, or instructions. These may constitute either software (e.g., code embodied on a machine-readable medium or in a transmission signal) or hardware. In hardware, the routines, etc., are tangible units capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as computer hardware that operates to perform certain operations as described herein.

In various embodiments, computer hardware, such as a processing element, may be implemented as special purpose or as general purpose. For example, the processing element may comprise dedicated circuitry or logic that is permanently configured, such as an application-specific integrated circuit (ASIC), or indefinitely configured, such as an FPGA, to perform certain operations. The processing element may also comprise programmable logic or circuitry (e.g., as encompassed within a general-purpose processor or other programmable processor) that is temporarily configured by software to perform certain operations. It will be appreciated that the decision to implement the processing element as special purpose, in dedicated and permanently configured circuitry, or as general purpose (e.g., configured by software) may be driven by cost and time considerations.

Accordingly, the term "processing element" or equivalents should be understood to encompass a tangible entity, be that an entity that is physically constructed, permanently configured (e.g., hardwired), or temporarily configured (e.g., programmed) to operate in a certain manner or to perform certain operations described herein. Considering embodiments in which the processing element is temporarily configured (e.g., programmed), each of the processing elements need not be configured or instantiated at any one instance in time. For example, where the processing element comprises a general-purpose processor configured using software, the general-purpose processor may be configured as respective different processing elements at different times. Software may accordingly configure the processing element to constitute a particular hardware configuration at one instance of time and to constitute a different hardware configuration at a different instance of time.

Computer hardware components, such as communication elements, memory elements, processing elements, and the like, may provide information to, and receive information from, other computer hardware components. Accordingly, the described computer hardware components may be regarded as being communicatively coupled. Where multiple of such computer hardware components exist contemporaneously, communications may be achieved through signal transmission (e.g., over appropriate circuits and buses) that connect the computer hardware components. In embodiments in which multiple computer hardware components are configured or instantiated at different times, communications between such computer hardware components may be achieved, for example, through the storage and retrieval of information in memory structures to which the multiple computer hardware components have access. For example, one computer hardware component may perform an operation and store the output of that operation in a memory device to which it is communicatively coupled. A further computer hardware component may then, at a later time, access the memory device to retrieve and process the stored output. Computer hardware components may also initiate communications with input or output devices, and may operate on a resource (e.g., a collection of information).

The various operations of example methods described herein may be performed, at least partially, by one or more processing elements that are temporarily configured (e.g., by software) or permanently configured to perform the relevant operations. Whether temporarily or permanently configured, such processing elements may constitute processing element-implemented modules that operate to perform one or more operations or functions. The modules referred to herein may, in some example embodiments, comprise processing element-implemented modules.

Similarly, the methods or routines described herein may be at least partially processing element-implemented. For example, at least some of the operations of a method may be performed by one or more processing elements or processing element-implemented hardware modules. The performance of certain of the operations may be distributed among the one or more processing elements, not only residing within a single machine, but deployed across a number of machines. In some example embodiments, the processing elements may be located in a single location (e.g., within a home environment, an office environment or as a server farm), while in other embodiments the processing elements may be distributed across a number of locations.

Unless specifically stated otherwise, discussions herein using words such as "processing," "computing," "calculating," "determining," "presenting," "displaying," or the like may refer to actions or processes of a machine (e.g., a computer with a processing element and other computer hardware components) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus.

The patent claims at the end of this patent application are not intended to be construed under 35 U.S.C. § 112(f) unless traditional means-plus-function language is expressly recited, such as "means for" or "step for" language being explicitly recited in the claim(s).

Although the technology has been described with reference to the embodiments illustrated in the attached drawing figures, it is noted that equivalents may be employed and substitutions made herein without departing from the scope of the claims.

Having thus described various embodiments of the invention, what is claimed as new and desired to be protected by Letters Patent includes the following:

## Claims

1. A system (12) for adjusting a tractor speed based on a performance of a pickup (14) of a baler (10), the system comprising:
a flow rate sensor (22) configured to monitor a feed point of the pickup (14), sense a flow rate of a crop (20) into the pickup (14), and output a flow rate signal with a level and/or data value that varies according to the flow rate of the crop (20) into the pickup (14);
a processing element (28) configured or programmed to
receive the flow rate signal,
receive a speed signal and/or data regarding a speed of a tractor (16) pulling the baler (10),
compare the flow rate from the flow rate signal with the speed from the speed signal and/or data to generate a comparison result, and
output an electronic speed signal with a level and/or data value that varies according to the comparison result; and
a tractor speed controller (30) configured to receive the speed signal and adjust a speed of the tractor (16) according to the level and/or data value of the speed signal.

2. The system of claim 1, wherein the processing element (28) is further configured or programmed to adjust the level and/or data value of the speed signal to increase the speed of the tractor (16) if the flow rate is greater than the speed of the tractor (16).

3. The system of claim 1, wherein the processing element (28) is further configured or programmed to adjust the level and/or data value of the speed signal to decrease the speed of the tractor (16) if the flow rate is less than the speed of the tractor (16).

4. The system of claim 1, wherein the processing element (28) is further configured or programmed to maintain the level and/or data value of the speed signal if the flow rate is approximately equal to the speed of the tractor (16).

5. The system of claim 1, wherein the processing element (28) is further configured or programmed to convert the units of the flow rate of the crop into the pickup (14) from the flow rate signal into units of speed if they are not in units of speed.

6. The system of claim 1, wherein the flow rate sensor (22) includes a lidar transceiver, a radar transceiver, a video camera, or a photographic camera.

7. A method for adjusting a tractor speed based on a performance of a pickup (14) of a baler (10), the method comprising:
monitoring the pickup (14) and determining a flow rate of a crop (20) into the pickup (14);
receiving a signal and/or data regarding a speed of a tractor (16) pulling the baler (10);
comparing the flow rate from the flow rate signal with the speed from the speed signal and/or data to generate a comparison result; and
adjusting the speed of the tractor (16) according to the comparison result.

8. The method of claim 7, wherein the speed of the tractor (16) is increased if the flow rate of the crop (20) into the pickup (14) is greater than the speed of the tractor (16), and/or wherein the speed of the tractor (16) is decreased if the flow rate of the crop (20) into the pickup (14) is less than the speed of the tractor (16).

9. The method of claim 7, wherein the speed of the tractor (16) is maintained if the flow rate of the crop (2) into the pickup (14) is approximately equal to the speed of the tractor (16).

## Patentansprüche

1. System (12) zum Einstellen einer Traktorgeschwindigkeit basierend auf einer Leistung einer Aufnahmevorrichtung (14) eines Ballenformers (10), wobei das System aufweist:
einen Flussratensensor (22), welcher konfiguriert ist, um einen Einlasspunkt der Aufnahmevorrichtung (14) zu überwachen, um eine Flussrate eines Ernteguts (20) in die Aufnahmevorrichtung (14) zu erfassen und um ein Flussratensignal mit einem Niveau- und/oder Datenwert, der entsprechend der Flussrate des Ernteguts (20) in die Aufnahmevorrichtung (14) variiert, auszugeben;
ein Verarbeitungselement (28), welches konfiguriert oder programmiert ist, um
ein Flussratensignal zu empfangen,
ein Geschwindigkeitssignal und/oder Daten bezüglich einer Geschwindigkeit eines den Ballenformer (10) ziehenden Traktors (16) zu empfangen,
die Flussrate von dem Flussratensignal mit der Geschwindigkeit von dem Geschwindigkeitssignal und/oder den Daten zu vergleichen, um ein Vergleichsergebnis zu generieren, und
ein elektronisches Geschwindigkeitssignal mit einem Niveau- und/oder Datenwert, der entsprechend dem Vergleichsergebnis variiert, auszugeben; und
einer Traktorgeschwindigkeitssteuervorrichtung (30), welche konfiguriert ist, um das Geschwindigkeitssignal zu empfangen und um die Geschwindigkeit des Traktors (16) entsprechend dem Niveau- und/oder Datenwert des Geschwindigkeitssignals einzustellen.

2. System nach Anspruch 1, wobei das Verarbeitungselement (28) weiterhin konfiguriert oder programmiert ist, um den Niveau- und/oder Datenwert des Geschwindigkeitssignals einzustellen, um die Geschwindigkeit des Traktors (16) zu erhöhen, wenn die Flussrate größer ist, als die Geschwindigkeit des Traktors (16).

3. System nach Anspruch 1, wobei das Verarbeitungselement (28) weiterhin konfiguriert oder programmiert ist, um den Niveau- und/oder Datenwert des Geschwindigkeitssignals einzustellen, um die Geschwindigkeit des Traktors (16) zu verringern, wenn die Flussrate niedriger ist, als die Geschwindigkeit des Traktors (16).

4. System nach Anspruch 1, wobei das Verarbeitungselement (18) weiterhin konfiguriert oder programmiert ist, um den Niveau- und/oder Datenwert des Geschwindigkeitssignals beizubehalten, wenn die Flussrate der Geschwindigkeit des Traktors (16) ungefähr gleicht.

5. System nach Anspruch 1, wobei das Verarbeitungselement (18) weiterhin konfiguriert oder programmiert ist, um die Einheiten der Flussrate des Ernteguts in die Aufnahmevorrichtung (14) von dem Flussratensignal in Geschwindigkeitseinheiten umzurechnen, wenn sie keine Geschwindigkeitseinheiten sind.

6. System nach Anspruch 1, wobei der Flussratesensor (22) einen Lidar-Transceiver, einen Radar-Transceiver, eine Videokamera oder eine fotografische Kamera umfasst.

7. Verfahren zum Einstellen einer Traktorgeschwindigkeit, basierend auf einer Leistung einer Aufnahmevorrichtung (14) eines Ballenformers (10), wobei das Verfahren aufweist:
Überwachen der Aufnahmevorrichtung (14) und Bestimmen eines Flussrate eines Ernteguts (20) in die Aufnahmevorrichtung (14);
Empfangen eines Signals und/oder von Daten bezüglich einer Geschwindigkeit eines den Ballenformer (10) ziehenden Traktors (16);
Vergleichen der Flussrate von dem Flussratensignal mit der Geschwindigkeit von dem Geschwindigkeitssignal und/oder den Daten, um ein Vergleichsergebnis zu generieren; und
Einstellen der Geschwindigkeit des Traktors (16) entsprechend dem Vergleichsergebnis.

8. Verfahren nach Anspruch 7, wobei die Geschwindigkeit des Traktors (16) erhöht wird, wenn die Flussrate des Ernteguts (20) in die Aufnahmevorrichtung (14) größer ist als die Geschwindigkeit des Traktors (16), und/oder die Geschwindigkeit des Traktors (16) verringert wird, wenn die Flussrate des Ernteguts (20) in die Aufnahmevorrichtung (14) niedriger ist als die Geschwindigkeit des Traktors (16).

9. Verfahren nach Anspruch 7, wobei die Geschwindigkeit des Traktors (16) beibehalten wird, wenn die Flussrate des Ernteguts (2) in die Aufnahmevorrichtung (14) der Geschwindigkeit des Traktors (16) ungefähr gleicht.

## Revendications

1. Dispositif (12) destiné à régler une vitesse de tracteur sur la base des performances d'un dispositif de collecte (14) d'une presse à balle (10), le dispositif comprenant :
un capteur de débit (22) configuré de manière à contrôler un point d'alimentation du dispositif de collecte (14), à détecter un débit d'une récolte (20) dans le dispositif de collecte (14) et à délivrer un signal de débit avec une valeur et/ou des données de niveau qui varient en fonction du débit de la récolte (20) dans le dispositif de collecte (14) ;
un élément de traitement (28) configuré ou programmé de manière à :
recevoir le signal de débit,
recevoir un signal et/ou des données de vitesse se rapportant à une vitesse d'un tracteur (16) tractant la presse à balle (10),
comparer le débit à partir du signal de débit à la vitesse à partir du signal et/ou des données de vitesse afin de produire un résultat de comparaison, et
délivrer un signal électronique de vitesse avec une valeur et/ou des données de niveau qui varient en fonction du résultat de comparaison ; et
un contrôleur de vitesse de tracteur (30) configuré de manière à recevoir le signal de vitesse et à régler une vitesse du tracteur (16) en fonction de la valeur et/ou des données de niveau du signal de vitesse.

2. Dispositif selon la revendication 1, dans lequel l'élément de traitement (28) est, en outre, configuré ou programmé de manière à régler la valeur et/ou les données de niveau du signal de vitesse afin d'augmenter la vitesse du tracteur (16) si le débit est supérieur à la vitesse du tracteur (16).

3. Dispositif selon la revendication 1, dans lequel l'élément de traitement (28) est, en outre, configuré ou programmé de manière à régler la valeur et/ou les données de niveau du signal de vitesse afin de réduire la vitesse du tracteur (16) si le débit est inférieur à la vitesse du tracteur (16).

4. Dispositif selon la revendication 1, dans lequel l'élément de traitement (28) est, en outre, configuré ou programmé de manière à maintenir la valeur et/ou les données de niveau du signal de vitesse si le débit est sensiblement égal à la vitesse du tracteur (16).

5. Dispositif selon la revendication 1, dans lequel l'élément de traitement (28) est, en outre, configuré ou programmé de manière à convertir les unités de débit de la récolte dans le dispositif de collecte (14) à partir du signal de débit en unités de vitesse, si elles ne sont pas en unités de la vitesse.

6. Dispositif selon la revendication 1, dans lequel le capteur de débit (22) comporte un transmetteur lidar, un transmetteur radar, une caméra vidéo ou un appareil photographique.

7. Procédé de réglage d'une vitesse de tracteur sur la base des performances d'un dispositif de collecte (14) d'une presse à balle (10), le procédé comprenant :
le contrôle du dispositif de collecte (14) et la détermination d'un débit d'une récolte (20) dans le dispositif de collecte (14) ;
la réception d'un signal et/ou de données se rapportant à une vitesse d'un tracteur (16) tractant la presse à balle (10) ;
la comparaison du débit à partir du signal de débit à la vitesse à partir du signal et/ou des données de vitesse afin de produire un résultat de comparaison ; et
le réglage de la vitesse du tracteur (16) en fonction du résultat de comparaison.

8. Procédé selon la revendication 7, dans lequel la vitesse du tracteur (16) est augmentée si le débit de la récolte (20) dans le dispositif de collecte (14) est supérieur à la vitesse du tracteur (16), et/ou dans lequel la vitesse du tracteur (16) est réduite si le débit de la récolte (20) dans le dispositif de collecte (14) est inférieur à la vitesse du tracteur (16).

9. Procédé selon la revendication 7, dans lequel la vitesse du tracteur (16) est maintenue si le débit de la récolte (2) dans le dispositif de collecte (14) est approximativement égal à la vitesse du tracteur (16).
